# EUROPEAN PATENT SPECIFICATION

(11) **EP 3 750 783 B1**
(45) Date of publication and mention of the grant of the patent: **06.10.2021**
(21) Application number: 20156413.5
(22) Date of filing: 10.02.2020
(51) Int. Cl.: B62D 7/15, B66F 9/075, B66F 9/10, B66F 17/00

(54) **UNMANNED CARRIER VEHICLE, CONTROL UNIT, AND PROGRAM**
UNBEMANNTES TRÄGERFAHRZEUG, STEUEREINHEIT UND PROGRAMM
VÉHICULE PORTEUR SANS CONDUCTEUR, UNITÉ DE COMMANDE ET PROGRAMME

(30) Priority: 11.06.2019 JP 2019108720
(43) Date of publication of application: 16.12.2020
(73) Proprietor: Mitsubishi Heavy Industries, Ltd., Chiyoda-ku Tokyo 100-8332 (JP)
(72) Inventor: HASEGAWA, Noriyuki, Tokyo, Tokyo 100-8332 (JP); FUTAHASHI, Kensuke, Tokyo, Tokyo 100-8332 (JP); KAWAUCHI, Naoto, Tokyo, Tokyo 100-8332 (JP)
(74) Representative: Henkel & Partner mbB

(56) References cited:
- WO-A1-2018/136987
- DE-A1-102010 015 439
- DE-A1-102017 003 528

## Description

### TECHNICAL FIELD

This disclosure relates to an unmanned carrier vehicle, a control unit, and a program.

### BACKGROUND

In some cases, an unmanned carrier vehicle to convey a cargo in an unmanned manner is used in a warehouse, a factory, and the like. Such an unmanned carrier vehicle is required to travel in a limited space. Accordingly, a variety of operations such as traversing, skewing, and pivot turn are required while varying a steering angle of a wheel in a state that a vehicle body remains stopped.

For example, Patent Document 1 discloses an unmanned carrier vehicle capable of traversing while turning a drive unit. Document WO2018/136987 shows a vehicle according to the preamble of claim 1.

### Citation List

### Patent Literature

Patent Document 1: JP2015-5020A

### SUMMARY

By the way, when a steering angle is adjusted in a state that a vehicle body remains stopped, a twisting force is generated between a floor surface and a wheel, causing a risk that burdens to the floor surface and the wheel become excessive. Such a problem depends on a load acting on the wheel due to a weight of the unmanned carrier vehicle and a weight of a loaded cargo.

Even with the configuration of Patent Document 1, in a case that a large load is acting on the wheel, a steering angle cannot be smoothly adjusted in some cased when the steering angle is to be adjusted in a state that the vehicle body remains stopped. Accordingly, there is room for improvement to perform steering angle adjustment more smoothly.

In this regard, it is an object at least one embodiment of the present invention to provide an unmanned carrier vehicle and the like capable of smoothly adjusting a steering angle in a state that a vehicle body remains stopped.

(1) An unmanned carrier vehicle according to at least one embodiment of the present invention includes a vehicle body; a plurality of wheels attached to the vehicle body; a steering actuator for adjusting a steering angle of each of the wheels; a cargo section arranged movably on the vehicle body in planar view; and a control unit configured to output an instruction for moving the cargo section, when adjustment of the steering angle is performed at least in a state that the vehicle body remains stopped, to reduce a load acting on one or more target wheels each being an adjustment target for the steering angle with the steering actuator among the plurality of wheels.

According to the configuration described above as (1), owing to that steering angle adjustment is performed after moving the cargo section to reduce the load acting on the one or more target wheels each being the adjustment target for the steering angle when steering angle adjustment is to be performed in the state that the vehicle body remains stopped, the steering angle can be smoothly adjusted in the state that the vehicle body remains stopped. In this case, since a twisting force occurring between a floor surface and the one or more target wheels is reduced, burdens to the floor surface and the one or more target wheels are reduced.

(2) In some embodiments, in the configuration described above as (1), the unmanned carrier vehicle further includes a moving mechanism configured to move the cargo section in a direction, as in a one-dimensional movable direction of the cargo section, from the one or more target wheels toward one or more non-target wheels other than the one or more target wheels in accordance with the instruction output by the control unit.

According to the configuration described above as (2), it is possible to reduce a load acting on the one or more target wheels each being an adjustment target for the steering angle by moving the cargo section with the moving mechanism. Since steering angle adjustment is performed in a state that the load is reduced, a steering angle can be smoothly adjusted.

(3) In some embodiments, in the configuration described above as (1) or (2), the unmanned carrier vehicle further includes a plurality of load sensors measuring loads acting on the wheels respectively and the control unit is configured to generate the instruction for moving the cargo section in accordance with a measurement value of the load sensor measuring a load acting on the one or more target wheels among the plurality of load sensors.

According to the configuration described above as (3), since the cargo section is moved in accordance with the measurement value of the load acting on the one or more target wheels, operation can be performed so that a twisting force occurring between a floor surface and the one or more target wheels is reduced more reliably.

(4) In some embodiments, in the configuration described above as (3), the control unit is configured to output the instruction for adjusting the steering angle in a state that the vehicle body remains stopped, when the measurement value of the load sensor measuring a load acting on the one or more target wheels is equal to or smaller than a reference value.

According to the configuration described above as (4), for example, in a case that a load value with which burdens to a floor surface and the wheels are not to be excessive is set as the reference value, steering adjustment in a state that the vehicle body remains stopped is performed without causing excessive burdens to the floor surface and the wheels.

(5) In some embodiments, in the configuration described above as (1) or (2), further includes a weight measuring sensor measuring a weight of a cargo loaded on the cargo section; and a position detecting sensor detecting a position of the cargo section. Here, the control unit is configured to generate the instruction for moving the cargo section based on a measurement value of the weight measuring sensor and the position of the cargo section detected by the position detecting sensor.

According to the configuration described above as (5), the configuration can be simplified compared to the case that the load sensors are arranged at the wheels respectively.

(6) In some embodiments, in the configuration described above as (5), the control unit is configured to calculate loads acting on the respective wheels based on the gravity center calculated based on the measurement value of the weight measuring sensor and the position of the cargo section detected by the position detecting sensor, and to generate the instruction for moving the cargo section based on the calculation result of the loads.

According to the configuration described above as (6), since the cargo section is moved in accordance with the calculation result of the loads acting on the respective wheels, operation can be performed so that a twisting force occurring between a floor surface and the one or more target wheels is reduced more reliably.

(7) In some embodiments, in the configuration described above as (6), the control unit is configured to output the instruction for adjusting the steering angle in a state that the vehicle body remains stopped, when a calculated value of the load acting on the one or more target wheels is equal to or smaller than a reference value.

According to the configuration described above as (7), for example, in a case that a load value with which burdens to a floor surface and the wheels are not to be excessive is set as the reference value, steering adjustment in a state that the vehicle body remains stopped is performed without causing excessive burdens to the floor surface and the wheels.

(8) In some embodiments, in the configuration described above as any one of (1) to (7), the plurality of wheels are each arranged rotatably about a revolution axis when the steering angle thereof is to be adjusted, and the revolution axis of each wheel and a grounding surface of the corresponding wheel are separated in the planar view.

According to the configuration described above as (8), since a steering angle is adjusted during movement of one or more target wheels, a twisting force occurring between a floor surface and the one or more target wheels can be reduced compared to a case that steering angle adjustment is performed while one or more target wheels remain stopped.

(9) In some embodiments, in the configuration described above as any one of (1) to (8), the control unit generates, based on a measurement value or a calculation result of a load acting on each of the wheels, the instruction for moving the cargo section into a positional range of the cargo section in which a load acting on the one or more target wheels is smaller than a load acting on one or more non-target wheels other than the one or more target wheels.

According to the configuration described above as (9), since the cargo section is moved into the positional range of the cargo section in which the load acting on the one or more target wheels is smaller than the load acting on the one or more non-target wheels other than the one or more target wheels, operation can be performed so that a twisting force occurring between a floor surface and the one or more target wheels is reduced more reliably.

(10) A control unit according to at least one embodiment of the present invention is a control unit for controlling an unmanned carrier vehicle comprising a plurality of wheels and a cargo section arranged movably on a vehicle body in planar view. Here, the control unit is configured to output an instruction for moving the cargo section, when adjustment of a steering angle of the plurality of wheels is performed at least in a state that the vehicle body remains stopped, to reduce a load acting on one or more target wheels each being an adjustment target for the steering angle among the plurality of wheels.

According to the configuration described above as (10), owing to that steering angle adjustment is performed after moving the cargo section to reduce the load acting on the one or more target wheels each being the adjustment target for the steering angle when steering angle adjustment is to be performed in the state that the vehicle body remains stopped, the steering angle can be smoothly adjusted in the state that the vehicle body remains stopped. In this case, since a twisting force occurring between a floor surface and the one or more target wheels is reduced, burdens to the floor surface and the one or more target wheels are reduced.

(11) A program according to at least one embodiment of the present invention is a program of causing a computer to function as a control unit controlling an unmanned carrier vehicle comprising a plurality of wheels and a cargo section arranged movably on a vehicle body in planar view. Here, the control unit outputs an instruction for moving the cargo section, when adjustment of a steering angle of the plurality of wheels is performed at least in a state that the vehicle body remains stopped, to reduce a load acting on one or more target wheels each being an adjustment target for the steering angle among the plurality of wheels.

According to the configuration described above as (11), owing to that steering angle adjustment is performed after moving the cargo section to reduce the load acting on the one or more target wheels each being the adjustment target for the steering angle when steering angle adjustment is to be performed in the state that the vehicle body remains stopped, the steering angle can be smoothly adjusted in the state that the vehicle body remains stopped. In this case, since a twisting force occurring between a floor surface and the one or more target wheels is reduced, burdens to the floor surface and the one or more target wheels are reduced.

At least one embodiment of the present invention provides an unmanned carrier vehicle and the like capable of smoothly adjusting a steering angle in a state that a vehicle body remains stopped.

### BRIEF DESCRIPTION OF DRAWINGS

FIG. 1A is a bottom view of the unmanned carrier vehicle according to an embodiment in a state of straight travelling.
FIG. 1B is a bottom view of the unmanned carrier vehicle 100 according to an embodiment in a state of turning.
FIG. 2A is a side view of the unmanned carrier vehicle according to an embodiment in a state that steering angles of wheels are being adjusted.
FIG. 2B is a side view of the unmanned carrier vehicle according to an embodiment in a state that a steering angle of a wheel is being adjusted.
FIG. 3 is a plane view illustrating a moving mechanism of the unmanned carrier vehicle according to an embodiment.
FIG. 4 is a plane view illustrating a moving mechanism of the unmanned carrier vehicle according to an embodiment.
FIG. 5 is a schematic view for explaining a method for calculating the gravity center in a state that the unmanned carrier vehicle according to an embodiment is loaded with a cargo.
FIG. 6 is a flowchart illustrating an example of control processes to be executed by a control unit of the unmanned carrier vehicle according to an embodiment.
FIG. 7 is a flowchart illustrating an example of control processes to be executed by a control unit of the unmanned carrier vehicle according to an embodiment.
FIG. 8 is a schematic view for explaining revolution of wheels of the unmanned carrier vehicle according to an embodiment.
FIG. 9 is a schematic view for explaining revolution of wheels of the unmanned carrier vehicle according to an embodiment.

### DETAILED DESCRIPTION

Embodiments of the present invention will now be described in detail with reference to the accompanying drawings. It is intended, however, that unless particularly identified, dimensions, materials, shapes, relative positions and the like of components described in the embodiments shall be interpreted as illustrative only and not intended to limit the scope of the present invention.

For example, an expression of relative or absolute arrangement such as "in a direction", "along a direction", "parallel", "orthogonal", "centered", "concentric" and "coaxial" shall not be construed as indicating only the arrangement in a strict literal sense, but also includes a state where the arrangement is relatively displaced by a tolerance, or by an angle or a distance whereby it is possible to achieve the same function.

For example, an expression of an equal state such as "same", "equal" and "uniform" shall not be construed as indicating only the state in which the feature is strictly equal, but also includes a state in which there is a tolerance or a difference that can still achieve the same function.

Further, for example, an expression of a shape such as a rectangular shape or a cylindrical shape shall not be construed as only the geometrically strict shape, but also includes a shape with unevenness or chamfered corners within the range in which the same effect can be achieved.

On the other hand, an expression such as "comprise", "include", "have", "contain" and "constitute" are not intended to be exclusive of other components.

In the following, description will be provided on a schematic configuration of an unmanned carrier vehicle 100 according to an embodiment. The unmanned carrier vehicle 100 is a vehicle that conveys a cargo in an unmanned manner in a warehouse, a factory, and the like. The unmanned carrier vehicle 100 according to an embodiment is a vehicle having a function to load and unload a cargo (e.g., a forklift capable of automated operation). Here, the unmanned carrier vehicle 100 may be a vehicle that only conveys a loaded cargo without having a function to load and unload a cargo.

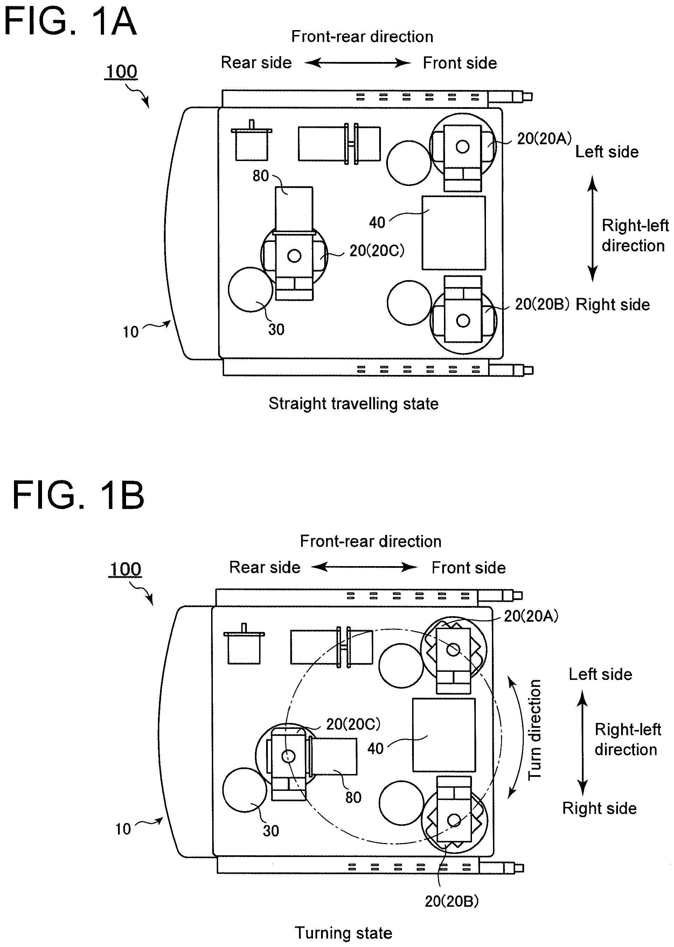

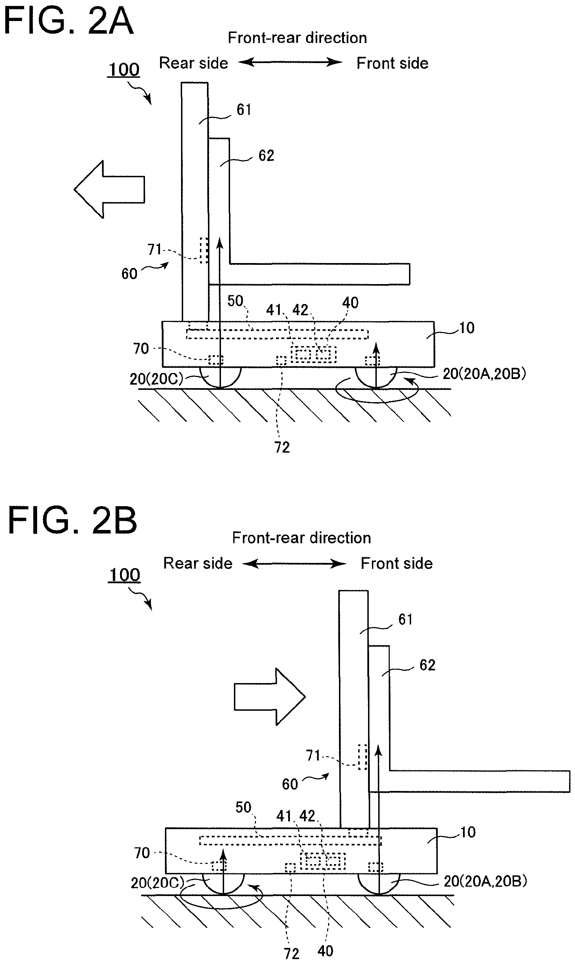

FIG. 1A is a bottom view of the unmanned carrier vehicle 100 according to an embodiment in a state of straight travelling. FIG. 1B is a bottom view of the unmanned carrier vehicle 100 according to an embodiment in a state of turning. FIG. 2A is a side view of the unmanned carrier vehicle 100 according to an embodiment in a state that steering angles of wheels 20 (20A, 20B) are being adjusted. FIG. 2B is a side view of the unmanned carrier vehicle 100 according to an embodiment in a state that a steering angle of a wheel 20 (20C) is being adjusted.

As illustrated in FIGs. 1A, 1B, 2A, and 2B, the unmanned carrier vehicle 100 according to an embodiment includes a vehicle body 10, a plurality of wheels 20 (20A, 20B, 20C) attached to the vehicle body 10, a steering actuator 30 for adjusting a steering angle of each of the wheels 20 (20A, 20B, 20C), a cargo section 60 on which a cargo is loaded, and a control unit 40 configured to output an instruction for moving the cargo section 60.

As illustrated in FIGs. 2A and 2B, the cargo section 60 includes a mast 61 extending in the vertical direction, and a fork 62 extending in the horizontal direction from the mast 61. The cargo section 60 is arranged movably on the vehicle body 10 in planar view. Here, "movable in planar view" means being capable of moving in a direction which has a horizontal component. Further, as illustrated in FIGs. 2A and 2B, in the unmanned carrier vehicle 100 according to an embodiment, the direction in which the fork 62 extends from the mast 61 is defined as a front side.

As illustrated in FIGs. 2A and 2B, the control unit 40 includes a controller 41 and a memory 42. The controller 41 is configured of a processor such as a central processing unit (CPU) and a graphics processing unit (GPU). The memory 42 is configured of, for example, a random access memory (RAM), a read only memory (ROM), or the like. Owing to that a program stored in the memory 42 is executed by the controller 41 in the control unit 40, control processes described below are executed.

For performing adjustment of a steering angle at least in a state that the vehicle body 10 remains stopped, the control unit 40 outputs an instruction for moving the cargo section 60 to reduce a load acting on one or more target wheels each being an adjustment target for the steering angle with the steering actuator 30 among the plurality of wheels 20 (20A, 20B, 20C).

Here, "state that the vehicle body 10 remains stopped" includes a state that the vehicle body 10 is almost stopped as well as a state that the vehicle body 10 is completely stopped. In other words, "state that the vehicle body 10 remains stopped" means a state that the unmanned carrier vehicle 100 does not substantially travel, that is, a state that the vehicle body 10 stays at one place. Further, "adjustment of a steering angle in a state that the vehicle body 10 remains stopped" includes adjustment of a steering angle, for example, when performing one or more of switching to traversing or skewing, pivot turn, ultra-pivotal turn (spin turn, counter-rotation turn, turn in place).

Here, description will be provided on revolution of the wheels 20 (20A, 20B, 20C) during steering angle adjustment. For example, FIG. 1A illustrates the wheels 20 (20A, 20B, 20C) of the unmanned carrier vehicle 100 in a state of straight travelling. In this case, all the wheels 20 (20A, 20B, 20C) are oriented in the straight travel direction (the front-rear direction in the example of FIG. 1A). On the other hand, in a case of performing ultra-pivotal turn, as illustrated in FIG. 1B, the wheels 20 (20A, 20B, 20C) of the unmanned carrier vehicle 100 are oriented respectively in directions along the turn direction (directions along a circle indicated by a dashed-dotted line).

Not illustrated specifically, in a case of switching to traversing or skewing, all the wheels 20 (20A, 20B, 20C) are oriented in a direction forming a certain angle with respect to the right-left direction or the front-rear direction. When performing pivotal turn, steering angles (i.e., orientation) of the wheels 20 (20A, 20B, 20C) of the unmanned carrier vehicle 100 are adjusted while the wheel 20 being an axis of the turning is kept unrotated and other wheels 20 are kept rotated. When pivotal turn is performed, the vehicle body 10 rotatably moves on an arc. However, since the unmanned carrier vehicle 100 stays at that place as turning about a turn axis, it can be conceived as the state that the vehicle body 10 substantially remains stopped in such a case as well.

The steering actuator 30 is, for example, an actuator including a motor causing the wheel 20 (20A, 20B, 20C) to revolve about a revolution axis that is perpendicular to a grounding surface. Here, the steering actuator 30 may be an actuator mechanically driven with oil pressure or air pressure not being an electrically-driven motor.

A drive motor 80 is arranged at one or more wheels 20 (20A, 20B, 20C) among the plurality of wheels 20 (20A, 20B, 20C), so that the plurality of wheels 20 (20A, 20B, 20C) are rotatably driven directly or indirectly by the drive motor 80. The drive motor 80 is controlled by the control unit 40. Thus, the unmanned carrier vehicle 100 becomes capable of travelling. The rotation axes of the plurality of wheels 20 (20A, 20B, 20C) are axes each being in parallel to a grounding surface and perpendicular to the revolution axis.

In an embodiment, for example, as illustrated in FIGs. 1A and 1B, the drive motor 80 is arranged only at the wheel 20 (20C) being a rear wheel. However, not limited to such a configuration of a rear-drive type, the unmanned carrier vehicle 100 may have a configuration of a three-wheel-drive type in which the drive motor 80 is arranged respectively at all the wheels 20 (20A, 20B, 20C) or a configuration of a front-drive type in which the drive motor 80 is arranged respectively at the wheels 20 (20A, 20B) being front wheels.

In the unmanned carrier vehicle 100 according to an embodiment, as illustrated in FIGs. 1A and 1B, two wheels 20 (20A, 20B) are arranged at the front side in the front-rear direction and one wheel 20 (20C) is arranged at the rear side in the front-rear direction. Accordingly, it is possible to discriminate between front wheels and a rear wheel among the above. However, the unmanned carrier vehicle 100 may be provided with wheels 20 at three or more positions in the front-rear direction. Thus, the wheels 20 of the unmanned carrier vehicle 100 are not limited to have a configuration in which the wheels 20 can be discriminated into front wheels and rear wheels.

In some embodiments, for example, as illustrated in FIGs. 2A and 2B, the unmanned carrier vehicle 100 further includes a moving mechanism 50 configured to move the cargo section 60 in a direction, as a one-dimensional movable direction of the cargo section 60, from one or more target wheels toward one or more non-target wheels other than the one or more target wheels in accordance with the instruction output by the control unit 40. Here, "the direction from one or more target wheels toward one or more non-target wheels other than the one or more target wheels" simply means a direction but not a start point and an end point in the direction. The above moving may include a case that the cargo section 60 stops after passing through the one or more non-target wheels and a case that the cargo section 60 stops before the one or more target wheels. In a case that steering angles of a first wheel (e.g., a front wheel) and a second wheel (e.g., a rear wheel) are adjusted respectively, it is possible to be configured to perform steering angle adjustment firstly on the wheel that requires a smaller movement amount from the current position of the cargo section 60.

In an embodiment, the one-dimensional movable direction of the cargo section 60 is the front-rear direction. In this case, for example, the cargo section 60 is moved in a direction to reduce a load acting on either the front wheel or the rear wheel, and a steering angle of the front wheel or the rear wheel having the reduced load acting thereon can be adjusted. Here, the one-dimensional movable direction of the cargo section 60 is simply required to be a direction including a horizontal component and may be the right-left direction. In this case, for example, the cargo section 60 is moved in a direction to reduce a load acting on either the wheel 20 on the right side and the wheel 20 on the left side, and a steering angle of the wheel 20 on the right side or the wheel 20 on the left side having the reduced load acting thereon can be adjusted.

For example, as illustrated in FIG. 2A, in a case that steering angles of the wheels 20 (20A, 20B) being front wheels are to be adjusted, the moving mechanism 50 moves the cargo section 60 in accordance with the instruction of the control unit 40 in a direction indicated by an arrow directing rearward in the front-rear direction. According to the above, loads acting on the wheels 20 (20A, 20B) being front wheels become small and a load acting on the wheel 20 (20C) being a rear wheel becomes large. Arrows extending from grounding surfaces of the wheels 20 represent magnitudes of the loads.

For example, as illustrated in FIG. 2B, in a case that a steering angle of the wheel 20 (20C) being a rear wheel is to be adjusted, the moving mechanism 50 moves the cargo section 60 in accordance with the instruction of the control unit 40 in a direction indicated by an arrow direction frontward in the front-rear direction. According to the above, a load acting on the wheel 20 (20C) being a rear wheel becomes small, and loads acting on the wheels 20 (20A, 20B) being front wheels become large. Arrows extending from the grounding surfaces of the wheels 20 represent magnitudes of the loads.

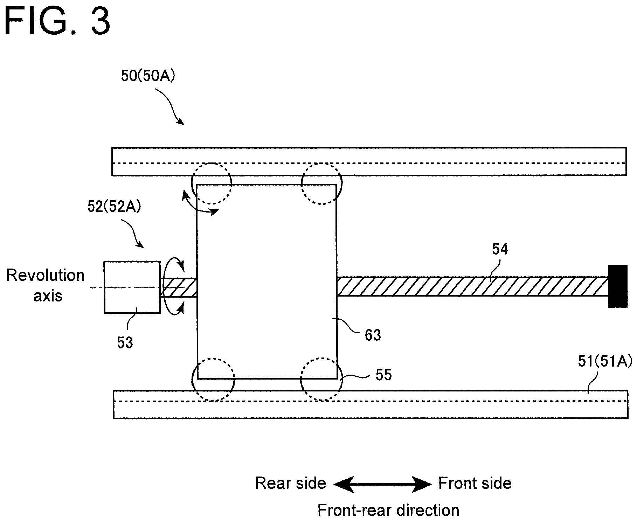

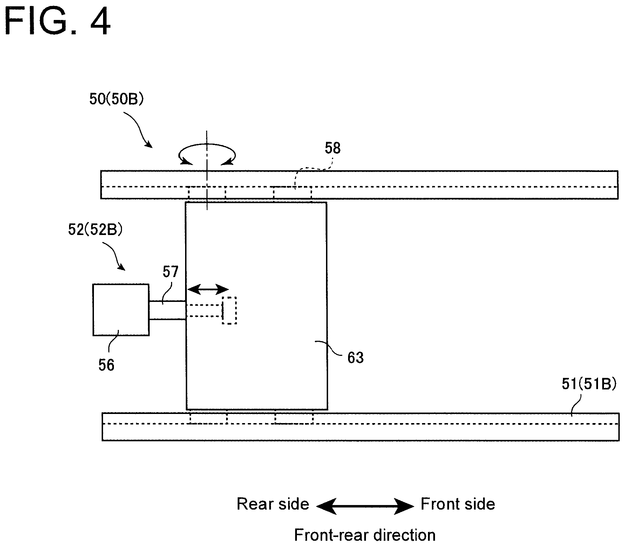

Here, description will be provided on a specific example of a configuration of the moving mechanism 50. FIG. 3 is a plane view illustrating the moving mechanism 50 (50A) of the unmanned carrier vehicle 100 according to an embodiment. FIG. 4 is a plane view illustrating the moving mechanism 50 (50B) of the unmanned carrier vehicle 100 according to an embodiment.

As illustrated in FIGs. 3 and 4, the moving mechanism 50 (50A, 50B) includes a guide element 51 (51A, 51B) extending in the movable direction of the cargo section 60 (i.e., the front-rear direction), and a drive element 52 (52A, 52B) for moving the cargo section 60 along the guide element 51 (51A, 51B). The guide element 51 (51A, 51B) may have an L-shape, U-shape, or a shape of a flat plane with a groove formed thereon.

For example, in the moving mechanism 50 (50A) illustrated in FIG. 3, the drive element 52 (52A) includes an electric motor 53 revolving about a revolution axis, and a ball screw 54 connected to the electric motor 53. Four contact portions 55 each having a roller shape or a ball shape are arranged at a connection portion 63 of the mast 61 connected to the moving mechanism 50 (50A). The contact portions 55 are configured to be rotatable as contacting to the guide element 51 (51A). With such a configuration, the ball screw 54 and the contact portions 55 revolve in accordance with revolution of the electric motor 53 and the cargo section 60 is moved in the front-rear direction along with the connection portion 63.

In the moving mechanism 50 (50B) illustrated in FIG. 4, the drive element 52 (52B) includes a hydraulic pump 56, and a hydraulic cylinder 57 configured to be expanded and contracted in the front-rear direction by the hydraulic pump 56. Four wheels 58 are arranged at a connection portion 63 of the mast 61 connected to the moving mechanism 50

(50B). The moving direction of the wheels 58 is restricted by the guide element 51 (51B). Further, the connection portion 63 is connected to the hydraulic cylinder 57. With such a configuration, the cargo section 60 is moved in the front-rear direction along with the connection portion 63 due to expansion and contraction of the hydraulic cylinder 57.

Here, the configuration of the moving mechanism 50 is not limited to the examples illustrated in FIGs. 3 and 4. For example, the moving mechanism 50 may be configured to include a chain and a sprocket. The drive element 52 may be configured to include the electric motor 53, a rack, and a pinion.

In the following, description will be provided on a case of measuring a load acting on each of the wheels 20 (20A, 20B, 20C) and a case of calculating a load acting on each of the wheels 20 (20A, 20B, 20C), as specific examples of control for moving the cargo section 60 in accordance with loads acting on the respective wheels 20 (20A, 20B, 20C),.

### <Configuration of measuring a load acting on each wheel>

In some embodiments, for example, as illustrated in FIGs. 2A and 2B, the unmanned carrier vehicle 100 includes a plurality of load sensors 70 for measuring loads acting on the respective wheels 20 (20A, 20B, 20C), and a position detecting sensor 72 for detecting a position of the cargo section 60. Here, the position of the cargo section 60 is only required to be a specific position of the cargo section 60 and may be, for example, a center position of the cargo section 60 or a position of the mast 61.

For example, the load sensor 70 is configured to include a load cell. For example, as illustrated in FIGs. 2A and 2B, the load sensor 70 is arranged between the vehicle body 10 and a support portion rotatably supporting the wheels 20 (20A, 20B, 20C). For example, the position detecting sensor 72 may be a rotary encoder arranged at the drive portion of the moving mechanism 50 of the cargo section 60 or may be a laser displacement meter arranged at a position to be capable of measuring displacement of the cargo section 60.

The position detecting sensor 72 may have a simplified configuration not being a configuration to be capable of detecting the position which possibly varies continuously. For example, the position detecting sensor 72 may have a configuration detecting where the cargo section 60 exists among a plurality of possibly discrete movement positions. Alternatively, the unmanned carrier vehicle 100 may be configured not to include the position detecting sensor 72. For example, the control unit 40 may be configured to estimate a position of the cargo section 60 in accordance with a history of instructions output from the control unit 40 or a drive state of the moving mechanism 50.

The control unit 40 is configured to generate the instruction for moving the cargo section 60 in accordance with a measurement value of the load sensor 70 measuring a load acting on one or more target wheels among the plurality of load sensors 70.

In some embodiments, the control unit 40 is configured to output the instruction for adjusting a steering angle in a state that the vehicle body 10 remains stopped, when the measurement value of the load sensor measuring a load acting on the one or more target wheels is equal to or smaller than a reference value.

Here, it is also possible that the control unit 40 is configured to output the instruction for moving the cargo section 60 only when the measurement value of the load sensor 70 satisfies a predetermined condition. In this case, the times of moving the cargo section 60 can be reduced compared to a case that the cargo section 60 is moved each time of adjusting a steering angle. The predetermined condition may be, for example, a condition that the measurement value of the load sensor 70 exceeds a reference value which is previously determined by a user or a manufacturer or a condition that a difference value with respect to a measurement value of another load sensor 70 falls within a range which is previously determined (i.e., a condition to reduce a load of a target wheel by moving the cargo section 60 within a range preventing overturn).

### < Configuration of calculating a load acting on each wheel based on the gravity center>

In some embodiments, the unmanned carrier vehicle 100 includes a weight measuring sensor 71 measuring a weight of a cargo loaded on the cargo section 60, and a position detecting sensor 72 detecting a position of the cargo section 60. The control unit 40 is configured to generate the instruction for moving the cargo section 60 based on a measurement value of the weight measuring sensor 71 and the position of the cargo section 60 detected by the position detecting sensor 72.

For example, the weight measuring sensor 71 may be a pressure sensor measuring oil pressure of a lift cylinder (not illustrated) for lifting-lowering the fork 62 or a load sensor arranged to measure a load acting on the fork 62.

In some embodiments, the control unit 40 is configured to calculate loads acting on the respective wheels 20 (20A, 20B, 20C) based on the gravity center calculated based on the measurement value of the weight measuring sensor 71 and the position of the cargo section 60 detected by the position detecting sensor 72, and to generate the instruction for moving the cargo section 60 based on the calculation result of the loads.

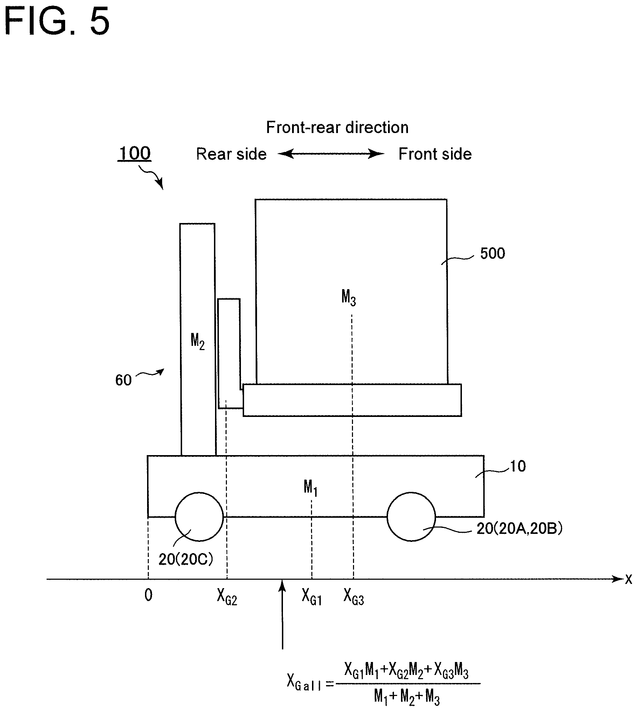

FIG. 5 is a schematic view for explaining a method for calculating the gravity center X_{Ga11} in a state that the unmanned carrier vehicle 100 according to an embodiment is loaded with a cargo 500. For example, in the example illustrated in FIG. 5, a position of the gravity center in the X axis direction is illustrated where M₁ represents a weight of the vehicle body 10, M₂ represents a weight of the cargo section 60, and M₃ represents a weight of the cargo 500. Here, the X axis direction is the movable direction of the cargo section 60, and for example, the front-rear direction. In the X axis direction, a gravity center position of the vehicle body 10 is denoted by X_{G1}, a gravity center position of the cargo section 60 is denoted by X_{G2}, and a gravity center position of the cargo 500 is denoted by X_{G3}, where a rear end position of the vehicle body 10 is an origin point, a value of which is zero.

In this case, the gravity center X_{Gall} of the unmanned carrier vehicle 100 loaded with the cargo 500 is obtained from an expression of "(X_{G1}M₁+X_{G2}M₂+X_{G3}M₃)/(M₁+M₂+M₃)". Here, X_{G1}, M₁, M₂, and M₃ are previously known (fixed values) conceivable from design information.

Accordingly, the gravity center X_{Gall} can be calculated based on the weight M₃ of the cargo 500 measured by the weight measuring sensor 71 and the gravity center positions X_{G2} and X_{G3} obtained based on the position detected by the position detecting sensor 72. Further, the loads acting on the respective wheels 20 (20A, 20B, 20C) can be calculated based on the calculated gravity center X_{Gall} and information of a positional relation among the respective wheels 20 (20A, 20B, 20C) being previously known (fixed value) conceivable from design information. Thus, the loads acting on the respective wheels 20 (20A, 20B, 20C) are calculated based on the calculated gravity center XGₐ₁₁ of the unmanned carrier vehicle 100 in a state that the cargo 500 is loaded and the positional relation among the respective wheels 20 (20A, 20B, 20C).

In some embodiments, the calculation method for the loads acting on the wheels 20 (20A, 20B, 20C) is utilized. Then, the control unit 40 is configured to output the instruction for adjusting a steering angle in a state that the vehicle body 10 remains stopped, when the calculated value acting on one or more target wheels is equal to or smaller than a reference value. In this case, the control unit 40 may calculate a target position of the cargo section 60 so that the calculated value of the load becomes equal to or smaller than the reference value and move the cargo section 60 to approach the target position within a movable range of the cargo section 60.

As described above, the unmanned carrier vehicle 100 may have a configuration of measuring the load acting on each of the wheels 20 (20A, 20B, 20C) or a configuration of calculating the load acting on each of the wheels 20 (20A, 20B, 20C) based on the gravity center X_{Gall}. In FIGs. 2A and 2B, for the sake of convenience, both the weight measuring sensor 71 and the plurality of load sensors 70 are illustrated. However, the unmanned carrier vehicle 100 is only required to have either thereof.

### <Control processes when measuring a load acting on each wheel>

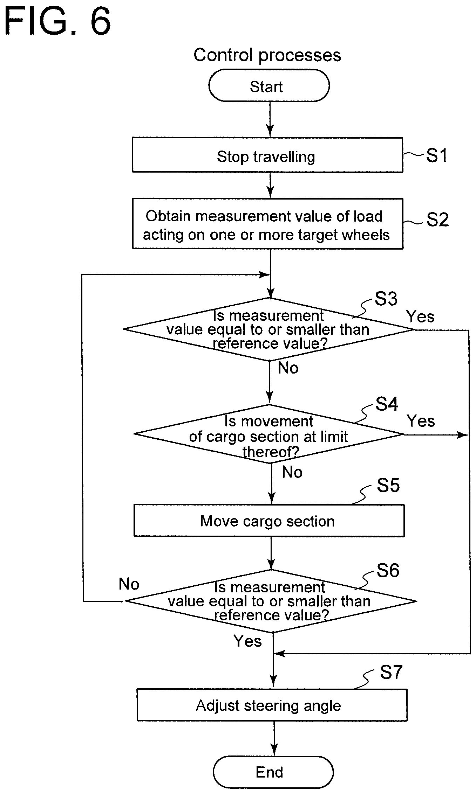

In the following, description will be provided on control processes when measuring a load acting on each of the wheels 20 (20A, 20B, 20C) with reference to FIG. 6. FIG. 6 is a flowchart illustrating an example of the control processes to be executed by the control unit 40 of the unmanned carrier vehicle 100 according to an embodiment.

First, the control unit 40 controls the drive motor 80 and stops travelling of the unmanned carrier vehicle 100 (step S1). Next, the control unit 40 obtains, from the load sensor 70, a measurement value of a load acting on one or more target wheels, a steering angle of which is to be adjusted, among the wheels 20 (20A, 20B, 20C) (step S2).

Then, the control unit 40 determines whether or not the measurement value of the load obtained in step S2 is equal to or smaller than the reference value (step S3). When the measurement value of the load is equal to or smaller than the reference value (Yes, in step S3), the control unit 40 adjusts a steering angle of the one or more target wheels (step S7) as skipping steps S4 to S6 described later.

On the other hand, when the measurement value of the load exceeds the reference value (No, in step S3), the control unit 40 determines whether or not movement of the cargo section 60 is at the limit of the cargo section 60 (step S4). Here, "whether or not being at the movement limit of the cargo section 60" means whether or not being at the limit position of the movable range of the cargo section 60. Such determination is performed by the control unit 40 obtaining a detection position of the cargo section 60 from the position detecting sensor 72. When the movement of the cargo section 60 is at the limit (Yes, in step S4), the control unit 40 adjusts a steering angle of the one or more target wheels (step S7) as skipping steps S5 and S6 described later.

On the other hand, when the movement of the cargo section 60 is not at the limit (No, in step S4), the control unit 40 moves the cargo section 60 (step S5). The movement may be movement by a constant movement amount (e.g., 10 cm).

Subsequently, the control unit 40 obtains again the measurement value acting on the one or more target wheels from the load sensor 70 and determines whether or not the measurement value of the load is equal to or smaller than the reference value (step S6). When the measurement value of the load is equal to or smaller than the reference value (Yes, in step S6), the control unit 40 adjusts a steering angle of the one or more target wheels (step S7). On the other hand, when the measurement value of the load exceeds the reference value (No, in step S6), the control unit 40 returns to step S3 and performs processes of step S3 and thereafter.

### <Control processes when calculating a load acting on each wheel based on the gravity center>

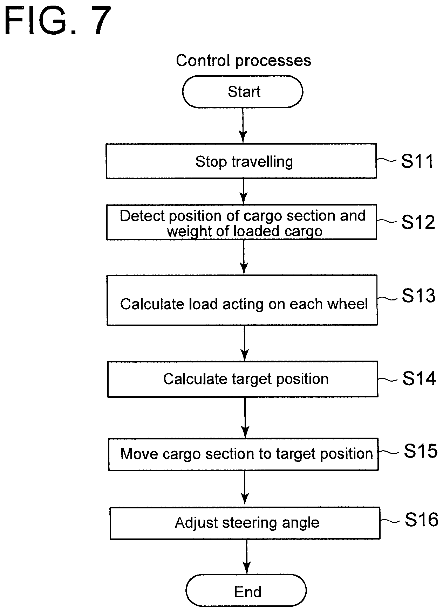

In the following, description will be provided on control processes when calculating a load acting on each of the wheels 20 (20A, 20B, 20C) based on the gravity center with reference to FIG. 7. FIG. 7 is a flowchart illustrating an example of the control processes to be executed by the control unit 40 of the unmanned carrier vehicle 100 according to an embodiment.

First, the control unit 40 controls the drive motor 80 and stops travelling of the unmanned carrier vehicle 100 (step S11). Next, the control unit 40 detects a position of the cargo section 60 and a weight of a loaded cargo (step S12). Specifically, the control unit 40 obtains the detection position of the cargo section 60 from the position detecting sensor 72 and obtains a measurement value of the weight of the loaded cargo from the weight measuring sensor 71.

The control unit 40 calculates loads acting on the respective wheels 20 (20A, 20B, 20C) by utilizing the above-described calculation method for the loads acting on the respective wheels 20 (20A, 20B, 20C) (step S13). Specifically, the control unit 40 calculates the gravity center X_{Ga11} of the unmanned carrier vehicle 100 loaded with a cargo and calculates the loads acting on the respective wheels 20 (20A, 20B, 20C) based on the gravity center X_{Gall}, the positional relation among the respective wheels 20 (20A, 20B, 20C), and the like.

Further, the control unit 40 performs calculation of a target position to which the cargo section 60 is to be moved (step S14). For example, the control unit 40 calculates the target position at which the load acting on the one or more target wheels is equal to or smaller than a reference value. When the target position is out of the movable range of the cargo section 60, the control unit 40 calculates the limit position of the movable range as the target position.

The control unit 40 outputs the instruction to the moving mechanism 50, so that the cargo section 60 is moved to the calculated target position (step S15). Subsequently, the control unit 40 adjusts a steering angle of the one or more target wheels (step S16).

As described above, for example, as illustrated in FIGs. 1A, 1B, 2A, and 2B, the unmanned carrier vehicle 100 according to an embodiment includes the vehicle body 10, the plurality of wheels 20 (20A, 20B, 20C) attached to the vehicle body 10, the steering actuator 30 for adjusting a steering angle of each of the wheels 20 (20A, 20B, 20C), the cargo section 60 arranged movably on the vehicle body 10 in the planar view, and the control unit 40 configured to output the instruction for moving the cargo section 60, when adjustment of the steering angle is performed at least in a state that the vehicle body 10 remains stopped, to reduce a load acting on the one or more target wheels each being an adjustment target for the steering angle with the steering actuator 30 among the plurality of wheels 20 (20A, 20B, 20C).

According to the above configuration, owing to that steering angle adjustment is performed after moving the cargo section 60 to reduce the load acting on the one or more target wheels each being the adjustment target for the steering angle when steering angle adjustment is to be performed in the state that the vehicle body 10 remains stopped, the steering angle can be smoothly adjusted in the state that the vehicle body 10 remains stopped. In this case, since a twisting force occurring between a floor surface and the one or more target wheels is reduced, burdens to the floor surface and the one or more target wheels are reduced.

In some embodiments, as illustrated in FIGs. 2A, 2B, 3, and 4, the unmanned carrier vehicle 100 further includes the moving mechanism 50 configured to move the cargo section 60 in a direction, as in a one-dimensional movable direction of the cargo section 60, from the one or more target wheels toward one or more non-target wheels other than the one or more target wheels in accordance with the instruction output by the control unit 40.

According to the above configuration, it is possible to reduce a load acting on the one or more target wheels each being an adjustment target for the steering angle by moving the cargo section 60 with the moving mechanism 50. Since steering angle adjustment is performed in a state that the load is reduced, a steering angle can be smoothly adjusted.

In some embodiments, for example, as illustrated in FIGs. 2A and 2B, the unmanned carrier vehicle 100 includes a plurality of load sensors 70 measuring loads acting on the wheels respectively, and the control unit 40 is configured to generate the instruction for moving the cargo section 60 in accordance with a measurement value of the load sensor 70 measuring a load acting on the one or more target wheels among the plurality of load sensors 70.

According to the above configuration, since the cargo section 60 is moved in accordance with the measurement value of the load acting on the one or more target wheels, operation can be performed so that a twisting force occurring between a floor surface and the one or more target wheels is reduced more reliably.

In some embodiments, for example, as illustrated in FIG. 6, the control unit 40 is configured to output the instruction for adjusting the steering angle in a state that the vehicle body 10 remains stopped, when the measurement value of the load sensor measuring a load acting on the one or more target wheels is equal to or smaller than a reference value.

According to the above configuration, for example, in a case that a load value with which burdens to a floor surface and the wheels 20 (20A, 20B, 20C) are not to be excessive is set as the reference value, steering adjustment in a state that the vehicle body 10 remains stopped is performed without causing excessive burdens to the floor surface and the wheels 20 (20A, 20B, 20C).

In some embodiments, for example, as illustrated in FIGs. 2A and 2B, the unmanned carrier vehicle 100 includes the weight measuring sensor 71 measuring a weight for a cargo loaded on the cargo section 60, and a position detecting sensor 72 detecting a position of the cargo section 60. Here, the control unit 40 is configured to generate the instruction for moving the cargo section 60 based on a measurement value of the weight measuring sensor 71 and the position of the cargo section 60 detected by the position detecting sensor 72.

According to the above configuration, the configuration can be simplified compared to the case that the load sensors 70 are arranged at the wheels 20 (20A, 20B, 20C) respectively.

In some embodiments, for example, as illustrated in FIGs. 5 and 7, the control unit 40 is configured to calculate loads acting on the respective wheels 20 (20A, 20B, 20C) based on the gravity center X_{Ga11} calculated based on the measurement value of the weight measuring sensor 71 and the position of the cargo section 60 detected by the position detecting sensor 72, and to generate the instruction for moving the cargo section 60 based on the calculation result of the loads.

According to the above configuration, since the cargo section 60 is moved in accordance with the calculation result of the loads acting on the respective wheels 20 (20A, 20B, 20C), operation can be performed so that a twisting force occurring between a floor surface and the one or more target wheels is reduced more reliably.

In some embodiments, for example, as illustrated in FIG. 7, the control unit 40 is configured to output the instruction for adjusting the steering angle in a state that the vehicle body 10 remains stopped, when the calculated value of the load acting on the one or more target wheels is equal to or smaller than a reference value.

According to the above configuration, for example, in a case that a load value with which burdens to a floor surface and the wheels 20 (20A, 20B, 20C) are not to be excessive is set as the reference value, steering adjustment in a state that the vehicle body 10 remains stopped is performed without causing excessive burdens to the floor surface and the wheels 20 (20A, 20B, 20C).

In some embodiments, for example, as illustrated in FIGs. 1A, 1B, 2A, and 2B, the plurality of wheels 20 (20A, 20B, 20C) of the unmanned carrier vehicle 100 are each arranged rotatably about a revolution axis when the steering angle thereof is to be adjusted by the steering actuator 30, and the revolution axis of each of the plurality of wheels 20 (20A, 20B, 20C) and a grounding surface of the corresponding wheel 20 (20A, 20B, 20C) are separated in the planar view. Accordingly, the plurality of wheels 20 (20A, 20B, 20C) are axially rotated at the time of steering angle adjustment.

However, the plurality of wheels 20 (20A, 20B, 20C) of the unmanned carrier vehicle 100 are not limited to have the above configuration. For example, as described in the following, the plurality of wheels 20 (20A, 20B, 20C) of the unmanned carrier vehicle 100 may be configured to perform orbital revolution at the time of steering angle adjustment. In the following, description will be provided on specific examples.

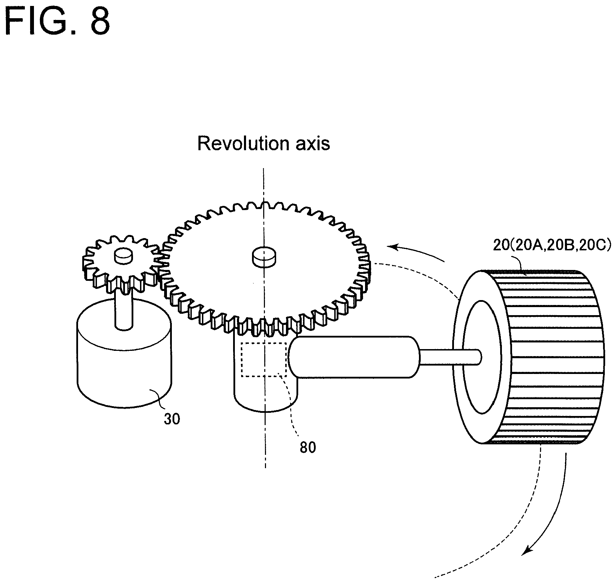

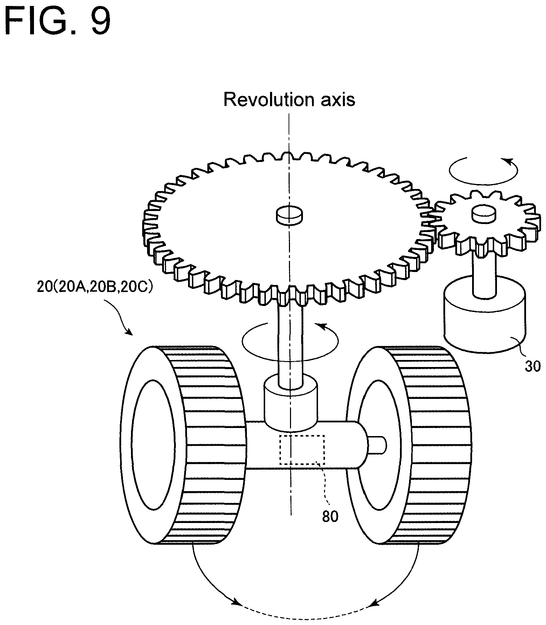

FIG. 8 is a schematic view for explaining revolution of the wheels 20 (20A, 20B, 20C) of the unmanned carrier vehicle 100 according to an embodiment. FIG. 9 is a schematic view for explaining revolution of the wheels 20 (20A, 20B, 20C) of the unmanned carrier vehicle 100 according to an embodiment.

In some embodiments, for example, as illustrated in FIGs. 8 and 9, the plurality of wheels 20 (20A, 20B, 20C) are each arranged rotatably about a revolution axis when the steering angle thereof is to be adjusted with respect to the vehicle body 10. Here, the revolution axis of each of the plurality of wheels 20 (20A, 20B, 20C) and a grounding surface of the corresponding wheel 20 (20A, 20B, 20C) are separated in the planar view.

In the example illustrated in FIG. 8, the drive motor 80 and the wheels 20 (20A, 20B, 20C) are connected to the steering actuator 30 via gears. When the steering actuator 30 is driven, the wheels 20 (20A, 20B, 20C) are revolved via the gears.

In the example illustrated in FIG. 9, each of the wheels 20 (20A, 20B, 20C) is configured of a pair of wheels. Here, the pair of wheels are connected via a shaft to be rotationally driven together by the drive motor 80. The drive motor 80 and the wheels 20 (20A, 20B, 20C) are connected to the steering actuator 30 via gears. When the steering actuator 30 is driven, the wheels 20 (20A, 20B, 20C) are revolved via the gears.

According to the configurations described above, since a steering angle is adjusted during movement of one or more target wheels, a twisting force occurring between a floor surface and the one or more target wheels can be reduced compared to a case that steering angle adjustment is performed while one or more target wheels remain stopped.

The control unit 40 according to an embodiment is the control unit 40 for controlling the unmanned carrier vehicle 100 including the plurality of wheels 20 (20A, 20B, 20C) and the cargo section 60 arranged movably on the vehicle body 10 in the planar view. Here, the control unit 40 is configured to output the instruction for moving the cargo section 60, when adjustment of a steering angle of the plurality of wheels 20 (20A, 20B, 20C) is performed at least in a state that the vehicle body 10 remains stopped, to reduce a load acting on one or more target wheels each being an adjustment target for the steering angle among the plurality of wheels 20 (20A, 20B, 20C).

Here, for example, as illustrated in FIGs. 1A, 1B, 2A, and 2B, the control unit 40 may be attached to the unmanned carrier vehicle 100 as a unit configuring a part of the unmanned carrier vehicle 100. However, not limited to such a configuration, the control unit 40 may be a unit transmitting the instruction to the unmanned carrier vehicle 100 through wire or wireless communication as a separate unit from the unmanned carrier vehicle 100. When the control unit 40 is separate from the unmanned carrier vehicle 100, the control unit 40 may be a unit configured to control a plurality of the unmanned carrier vehicles 100 and transmit instructions in accordance with situations of the respective unmanned carrier vehicles 100.

According to the above configuration, owing to that steering angle adjustment is performed after moving the cargo section 60 to reduce the load acting on the one or more target wheels each being the adjustment target for the steering angle when steering angle adjustment is to be performed in the state that the vehicle body 10 remains stopped, the steering angle can be smoothly adjusted. In this case, since a twisting force occurring between a floor surface and the one or more target wheels is reduced, burdens to the floor surface and the one or more target wheels are reduced.

Not limited to the embodiments described above, the present invention includes modifications of the embodiments and appropriate combinations thereof. In the following, description will be provided on modifications of the abovementioned embodiments.

Not limited to the examples illustrated in FIGs. 6 and 7, control processes to be executed by the control unit 40 can be appropriately modified. For example, in some embodiments, the control unit 40 may generate, based on a measurement value or a calculation result of a load acting on each of the wheels 20 (20A, 20B, 20C), the instruction for moving the cargo section 60 into a positional range of the cargo section 60 in which a load acting on the one or more target wheels is smaller than a load acting on one or more non-target wheels other than the one or more target wheels.

According to the above configuration, since the cargo section 60 is moved into the positional range of the cargo section 60 in which the load acting on the one or more target wheels is smaller than the load acting on the one or more non-target wheels other than the one or more target wheels, operation can be performed so that a twisting force occurring between a floor surface and the one or more target wheels is reduced more reliably.

The unmanned carrier vehicle 100 illustrated in FIGs. 1A, 1B, 2A, and 2B has the three wheels 20 (20A, 20B, 20C). Further, the steering actuator 30 is arranged at each of the three wheels 20 (20A, 20B, 20C). However, the unmanned carrier vehicle 100 is not limited to such a configuration.

For example, in some embodiments, the unmanned carrier vehicle 100 may have four or more wheels 20. The steering actuator 30 may be arranged at each of all the wheels 20, or may be arranged at part of the wheels 20 while other wheels 20 are configured as rotatable driven wheels (i.e., casters), steering angles of which are not to be adjusted.

In the control processes illustrated in FIG. 7, the target position is calculated in step S14. In this case, the movement amount of the cargo section 60 can be reduced to a necessary amount. However, the control unit 40 is not limited to the configuration to perform the control processes described above. The control unit 40 may be configured not to calculate the target position or may be configured to move the cargo section 60 to a predetermined position (e.g., one of two positions). In this case, it is possible to reduce calculation processing compared to the configuration to calculate the target position.

## Claims

1. An unmanned carrier vehicle (100), comprising:
a vehicle body (10);
a plurality of wheels (20) attached to the vehicle body (10);
a steering actuator (30) for adjusting a steering angle of each of the wheels (20) , the vehicle **characterised in that**
a cargo section (60) is arranged movably on the vehicle body (10) in planar view; and
a control unit (40) is configured to output an instruction for moving the cargo section (60), when adjustment of the steering angle is performed at least in a state that the vehicle body (10) remains stopped, to reduce a load acting on one or more target wheels each being an adjustment target for the steering angle with the steering actuator (30) among the plurality of wheels (20).

2. The unmanned carrier vehicle (100) according to claim 1, further comprising a moving mechanism configured to move the cargo section (60) in a direction, as in a one-dimensional movable direction of the cargo section (60), from the one or more target wheels toward one or more non-target wheels other than the one or more target wheels in accordance with the instruction output by the control unit (40).

3. The unmanned carrier vehicle (100) according to claim 1 or 2, further comprising a plurality of load sensors (70) for measuring loads acting on the wheels (20) respectively, wherein the control unit (40) is configured to generate the instruction for moving the cargo section (60) in accordance with a measurement value of the load sensor (70) measuring a load acting on the one or more target wheels among the plurality of load sensors (70).

4. The unmanned carrier vehicle (100) according to claim 3, wherein the control unit (40) is configured to output the instruction for adjusting the steering angle in a state that the vehicle body (10) remains stopped, when the measurement value of the load sensor (70) measuring a load acting on the one or more target wheels is equal to or smaller than a reference value.

5. The unmanned carrier vehicle (100) according to claim 1 or 2, further comprising:
a weight measuring sensor (71) for measuring a weight of a cargo (500) loaded on the cargo section (60); and
a position detecting sensor (72) for detecting a position of the cargo section (60),
wherein the control unit (40) is configured to generate the instruction for moving the cargo section (60) based on a measurement value of the weight measuring sensor (71) and the position of the cargo section (60) detected by the position detecting sensor (72).

6. The unmanned carrier vehicle (100) according to claim 5, wherein the control unit (40) is configured to calculate loads acting on the respective wheels (20) based on the gravity center calculated based on the measurement value of the weight measuring sensor and the position of the cargo section (60) detected by the position detecting sensor, and to generate the instruction for moving the cargo section (60) based on the calculation result of the loads.

7. The unmanned carrier vehicle (100) according to claim 6, wherein the control unit (40) is configured to output the instruction for adjusting the steering angle in a state that the vehicle body (10) remains stopped, when a calculated value of the load acting on the one or more target wheels is equal to or smaller than a reference value.

8. The unmanned carrier vehicle (100) according to any one of claims 1 to 7,
wherein the plurality of wheels (20) are each arranged rotatably about a revolution axis when the steering angle thereof is to be adjusted, and
the revolution axis of each wheel (20) and a grounding surface of the corresponding wheel (20) are separated in the planar view.

9. The unmanned carrier vehicle (100) according to any one of claims 1 to 8,
wherein the control unit (40) is configured to generate, based on a measurement value or a calculation result of a load acting on each of the wheels (20), the instruction for moving the cargo section (60) into a positional range of the cargo section (60) in which a load acting on the one or more target wheels is smaller than a load acting on one or more non-target wheels other than the one or more target wheels.

10. A control unit (40) for controlling an unmanned carrier vehicle (100) comprising a plurality of wheels (20) and a cargo section (60) arranged movably on a vehicle body (10) in planar view,
**characterised in that**
the control unit (40) is configured to output an instruction for moving the cargo section (60), when adjustment of a steering angle of the plurality of wheels (20) is performed at least in a state that the vehicle body (10) remains stopped, to reduce a load acting on one or more target wheels each being an adjustment target for the steering angle among the plurality of wheels (20).

11. A program of causing a computer to function as a control unit (40) controlling an unmanned carrier vehicle (100) comprising a plurality of wheels (20) and a cargo section (60) arranged movably on a vehicle body (10) in planar view,
**characterised in that**
the control unit (40) outputs an instruction for moving the cargo section (60), when adjustment of a steering angle of the plurality of wheels (20) is performed at least in a state that the vehicle body (10) remains stopped, to reduce a load acting on one or more target wheels each being an adjustment target for the steering angle among the plurality of wheels (20).

## Patentansprüche

1. Ein unbemanntes Trägerfahrzeug (100), das umfasst:
einen Fahrzeugkörper (10),
eine Vielzahl von Rädern (20), die an dem Fahrzeugkörper (10) angebracht sind,
einen Lenkaktuator (30) zum Einstellen eines Lenkwinkels jedes der Räder (20),
wobei das Fahrzeug **dadurch gekennzeichnet ist, dass**
ein Frachtabschnitt (60) in der Draufsicht beweglich an dem Fahrzeugkörper (10) angeordnet ist, und
eine Steuereinheit (40) konfiguriert ist, um eine Anweisung zum Bewegen des Frachtabschnitts (60) auszugeben, wenn eine Einstellung des Lenkwinkels zumindest in einem Zustand durchgeführt wird, in dem der Fahrzeugkörper (10) angehalten bleibt, um eine Last zu verringern, die auf ein oder mehrere Zielräder wirkt, die jeweils ein Einstellungsziel für den Lenkwinkel mit dem Lenkaktuator (30) unter der Vielzahl von Rädern (20) sind.

2. Das unbemannte Trägerfahrzeug (100) nach Anspruch 1, das ferner einen Bewegungsmechanismus umfasst, der konfiguriert ist, um den Frachtabschnitt (60) in einer Richtung, wie in einer eindimensionalen Bewegungsrichtung des Frachtabschnitts (60), von dem einen oder den mehreren Zielrädern zu einem oder mehreren Nicht-Zielrädern, die sich von dem einen oder den mehreren Zielrädern unterscheiden, in Übereinstimmung mit dem von der Steuereinheit (40) ausgegebenen Befehl zu bewegen.

3. Das unbemannte Trägerfahrzeug (100) nach Anspruch 1 oder 2, ferner mit einer Mehrzahl von Lastsensoren (70) zum Messen von jeweils auf die Räder (20) wirkenden Lasten,
wobei die Steuereinheit (40) konfiguriert ist, um die Anweisung zum Bewegen des Frachtabschnitts (60) in Übereinstimmung mit einem Messwert des Lastsensors (70) zu erzeugen, der eine Last misst, die auf das eine oder die mehreren Zielräder unter der Vielzahl von Lastsensoren (70) wirkt.

4. Das unbemannte Trägerfahrzeug (100) nach Anspruch 3, wobei die Steuereinheit (40) konfiguriert ist, um die Anweisung zum Einstellen des Lenkwinkels in einem Zustand auszugeben, in dem der Fahrzeugkörper (10) angehalten bleibt, wenn der Messwert des Lastsensors (70), der eine auf das eine oder die mehreren Zielräder wirkende Last misst, gleich einem oder kleiner als ein Referenzwert ist.

5. Das unbemannte Trägerfahrzeug (100) nach Anspruch 1 oder 2, ferner umfassend:
einen Gewichtsmesssensor (71) zum Messen eines Gewichts einer auf dem Frachtabschnitt (60) geladenen Fracht (500), und
einen Positionserfassungssensor (72) zum Erfassen einer Position des Frachtabschnitts (60),
wobei die Steuereinheit (40) konfiguriert ist, um die Anweisung zum Bewegen des Frachtabschnitts (60) auf der Grundlage eines Messwerts des Gewichtsmesssensors (71) und der von dem Positionserfassungssensor (72) erfassten Position des Frachtabschnitts (60) zu erzeugen.

6. Das unbemannte Trägerfahrzeug (100) nach Anspruch 5, wobei die Steuereinheit (40) konfiguriert ist, um die auf die jeweiligen Räder (20) wirkenden Lasten auf der Grundlage des Schwerezentrums zu berechnen, das auf der Grundlage des Messwerts des Gewichtsmesssensors und der vom Positionserfassungssensor erfassten Position des Frachtabschnitts (60) berechnet wird, und um die Anweisung zum Bewegen des Frachtabschnitts (60) auf der Grundlage des Berechnungsergebnisses der Lasten zu erzeugem.

7. Das unbemannte Trägerfahrzeug (100) nach Anspruch 6,
wobei die Steuereinheit (40) konfiguriert ist, um die Anweisung zum Einstellen des Lenkwinkels in einem Zustand auszugeben, in dem der Fahrzeugkörper (10) angehalten bleibt, wenn ein berechneter Wert der auf das eine oder die mehreren Zielräder wirkenden Last gleich oder kleiner als ein Referenzwert ist.

8. Das unbemannte Trägerfahrzeug (100) nach einem der Ansprüche 1 bis 7,
wobei die Vielzahl der Räder (20) jeweils um eine Drehachse drehbar angeordnet sind, wenn ihr Lenkwinkel einzustellen ist, und
die Drehachse eines jeden Rades (20) und eine Bodenoberfläche des entsprechenden Rades (20) in der Draufsicht voneinander getrennt sind.

9. Das unbemannte Trägerfahrzeug (100) nach einem der Ansprüche 1 bis 8,
wobei die Steuereinheit (40) konfiguriert ist, um auf der Grundlage eines Messwerts oder eines Berechnungsergebnisses einer auf jedes der Räder (20) wirkenden Last die Anweisung zum Bewegen des Frachtabschnitts (60) in einen Positionsbereich des Frachtabschnitts (60) zu erzeugen, in dem eine auf das eine oder die mehreren Zielräder wirkende Last kleiner ist als eine Last, die auf ein oder mehrere andere Nicht-Zielräder als das eine oder die mehreren Zielräder wirkt.

10. Eine Steuereinheit (40) zur Steuerung eines unbemannten Trägerfahrzeugs (100), das eine Vielzahl von Rädern (20) und einen Frachtabschnitt (60) aufweist, der in der Draufsicht beweglich auf einem Fahrzeugkörper (10) angeordnet ist,
**dadurch gekennzeichnet, dass**
die Steuereinheit (40) konfiguriert ist, um einen Befehl zum Bewegen des Frachtabschnitts (60) auszugeben, wenn die Einstellung eines Lenkwinkels der Vielzahl von Rädern (20) zumindest in einem Zustand durchgeführt wird, in dem der Fahrzeugkörper (10) angehalten bleibt, um eine Last zu verringern, die auf ein oder mehrere Zielräder wirkt, die jeweils ein Einstellziel für den Lenkwinkel unter der Vielzahl von Rädern (20) sind.

11. Ein Programm, das einen Computer dazu veranlasst, als eine Steuereinheit (40) zu fungieren, die ein unbemanntes Trägerfahrzeug (100) steuert, das eine Vielzahl von Rädern (20) und einen Frachtabschnitt (60) umfasst, der in der Draufsicht beweglich auf einem Fahrzeugkörper (10) angeordnet ist,
**dadurch gekennzeichnet, dass**
die Steuereinheit (40) eine Anweisung zum Bewegen des Frachtabschnitts (60) ausgibt, wenn eine Einstellung eines Lenkwinkels der Vielzahl von Rädern (20) zumindest in einem Zustand durchgeführt wird, in dem der Fahrzeugkörper (10) angehalten bleibt, um eine Last zu verringern, die auf ein oder mehrere Zielräder wirkt, die jeweils ein Einstellziel für den Lenkwinkel unter der Vielzahl von Rädern (20) sind.

## Revendications

1. Véhicule (100) porteur sans conducteur, comprenant :
une carrosserie (10) de véhicule ;
une pluralité de roues (20) fixées à la carrosserie (10) du véhicule ;
un actionneur (30) de direction pour régler un angle de braquage de chacune des roues (20), le véhicule étant **caractérisé en ce qu'**une partie (60) de chargement est montée de manière mobile sur la carrosserie (10) du véhicule en vue en plan ;
une unité (40) de commande est configurée pour sortir une instruction pour déplacer la partie (60) de chargement, lorsque le réglage de l'angle de braquage est effectué, au moins dans un état où la carrosserie (10) du véhicule reste arrêtée, pour réduire une charge agissant sur une ou plusieurs roues cibles, chacune étant une cible de réglage pour l'angle de braquage par l'actionneur (30) de direction parmi la pluralité de roues (20).

2. Véhicule (100) porteur sans conducteur suivant la revendication 1, comprenant en outre un mécanisme de déplacement configuré pour déplacer la partie (60) de chargement dans une direction, sous la forme d'une direction mobile suivant une dimension, de la partie (60) de chargement, vers une ou plusieurs roues non cibles autres que la une et/ou plusieurs roues cibles en fonction de l'instruction sortie par l'unité (40) de commande.

3. Véhicule (100) porteur sans conducteur suivant la revendication 1 ou 2, comprenant en outre une pluralité de capteurs (70) de charge pour mesurer des charges agissant sur les roues (20) respectivement,
dans lequel l'unité (40) de commande est configurée pour créer l'instruction de déplacement de la partie (60) de chargement en fonction d'une valeur de mesure du capteur (70) de charge mesurant une charge agissant sur la une ou les plusieurs roues cibles parmi la pluralité de capteurs (70) de charge.

4. Véhicule (100) porteur sans conducteur suivant la revendication 3,
dans lequel l'unité (40) de commande est configurée pour sortir l'instruction pour régler l'angle de braquage dans un état où la carrosserie (10) du véhicule reste arrêtée, lorsque la valeur de mesure du capteur (70) de charge mesurant une charge agissant sur la une ou les plusieurs roues cibles est inférieure ou égale à une valeur de référence.

5. Véhicule (100) porteur sans conducteur suivant la revendication 1 ou 2, comprenant en outre :
un capteur (71) de mesure du poids pour mesurer un poids d'un chargement (500) chargé sur la partie (60) de chargement ;
un capteur (72) de détection de position pour détecter une position de la partie (60) de chargement,
dans lequel l'unité (40) de commande est configurée pour créer l'instruction de déplacement de la partie (60) de chargement sur la base d'une valeur de mesure du capteur (71) de mesure du poids et de la position de la partie (60) de chargement détectée par le capteur (72) de détection de position.

6. Véhicule (100) porteur sans conducteur suivant la revendication 5, dans lequel l'unité (40) de commande est configurée pour calculer des charges agissant sur les roues (20) respectives sur la base du centre de gravité, calculé sur la base de la valeur de mesure du capteur de mesure de poids et de la position de la partie (60) de chargement détectée par le capteur de détection de position, et pour créer l'instruction pour déplacer la partie (60) de chargement sur la base du résultat du calcul des charges.

7. Véhicule (100) porteur sans conducteur suivant la revendication 6, dans lequel l'unité (40) de commande est configurée pour sortir l'instruction pour régler l'angle de braquage dans un état où la carrosserie (10) du véhicule reste arrêtée, lorsqu'une valeur calculée de la charge agissant sur la une ou les plusieurs roues cibles est inférieure ou égale à une valeur de référence.

8. Véhicule (100) porteur sans conducteur suivant l'une quelconque des revendications 1 à 7,
dans lequel la pluralité de roues (20) sont montées chacune à rotation autour d'un axe de révolution lorsque leur angle de braquage doit être réglé et
l'axe de révolution de chaque roue (20) et une surface de mise à la terre de la roue (20) correspondante sont séparés dans la vue en plan.

9. Véhicule (100) porteur sans conducteur suivant l'une quelconque des revendications 1 à 8,
dans lequel l'unité (40) de commande est configurée pour créer, sur la base d'une valeur de mesure ou d'un résultat de calcul d'une charge agissant sur chacune des roues (20), l'instruction de déplacement de la partie (60) de chargement pour la mettre dans une plage de position de la partie (60) de chargement dans laquelle une charge agissant sur la une ou les plusieurs roues cibles est plus petite qu'une charge agissant sur la une et les plusieurs roues non cibles autres que la une ou les plusieurs roues cibles.

10. Unité (40) de commande pour commander un véhicule (100) porteur sans conducteur, comprenant une pluralité de roues (20) et une partie (60) de chargement montée mobile sur la carrosserie (10) du véhicule en vue en plan
**caractérisée en ce que** l'unité (40) de commande est configurée pour sortir une instruction pour déplacer la partie (60) de chargement, lorsque le réglage de l'angle de braquage est effectué, au moins dans un état où la carrosserie (10) du véhicule reste arrêtée, pour réduire une charge agissant sur une ou plusieurs roues cibles, chacune étant une cible de réglage pour l'angle de braquage par l'actionneur (30) de direction parmi la pluralité de roues (20).

11. Programme pour faire qu'un ordinateur fonctionne comme unité (40) de commande commandant un véhicule (100) porteur sans conducteur comprenant une pluralité de roues (20) et une partie (60) de chargement montée de manière mobile sur la carrosserie (10) du véhicule en vue en plan,
**caractérisé en ce que** l'unité (40) de commande sort une instruction pour déplacer la partie (60) de chargement, lorsqu'un réglage d'un angle de braquage de la pluralité de roues (20) est effectué, au moins dans un état dans lequel la carrosserie (10) du véhicule reste arrêtée, pour réduire une charge agissant sur une ou plusieurs roues cibles, chacune étant une cible de réglage pour l'angle de braquage, parmi la pluralité de roues (20).
